Europäisches Patentamt

**European Patent Office**

Office européen des brevets

(11) Veröffentlichungsnummer: **0 237 780**

**A2**

(12) **EUROPÄISCHE PATENTANMELDUNG**

(21) Anmeldenummer: **87101925.3**

(22) Anmeldetag: **11.02.87**

(51) Int. Cl.³: **C 23 C 4/04**
C 23 C 4/02
//H05B7/12, C25C7/02,
C04B41/85

(30) Priorität: **20.03.86 DE 3609359**

(43) Veröffentlichungstag der Anmeldung:
**23.09.87** Patentblatt **87/39**

(84) Benannte Vertragsstaaten:
AT BE CH DE ES FR GB GR IT LI LU NL SE

(71) Anmelder: **Reimbold & Strick GmbH & Co. KG**
**Kunftstrasse 4**
**D-5000 Köln 91(DE)**

(72) Erfinder: **Cremer, Wilhelm, Dipl.-Ing**
**Vorhelmer Weg 99**
**D-4730 Ahlen(DE)**

(74) Vertreter: **Keller, Johanna Carola et al,**
**Deichmannhaus am Hauptbahnhof**
**D-5000 Köln 1(DE)**

(54) Verfahren zur Herstellung von elektrisch leitfähig und oxidationsbeständig beschichteten Graphit-Formkörpern.

(57) Es wird ein Verfahren zur Herstellung von elektrisch leitfähig und oxidationsbeständig beschichteten Graphit-Formkörpern beschrieben, das sich insbesondere für die Beschichtung von Graphit-Elektroden eignet, die beim Elektroschmelzen von Metallen und Metallegierungen im Elektroschmelzofen verwendet werden. Das Verfahren ist gekennzeichnet durch eine Vielzahl von Verfahrensmerkmalen, deren Kombination zur Erzielung einwandfreier Silicium-Beschichtungen auf der Elektrodenoberfläche erfindungswesentlich ist.

EP 0 237 780 A2

0237780

## Verfahren zur Herstellung von elektrisch leitfähig und oxidationsbeständig beschichteten Graphit-Formkörpern

Formkörper aus Kohlenstoff und Graphit haben mit dem Aufschwung in den verschiedenen Bereichen von Chemie, Technik und Metallurgie erheblich an Bedeutung gewonnen, insbesondere in Form von Elektroden für die Elektrostahl- und Karbidherstellung, für die Aluminiumelektrolyse und die Chloralkalielektrolyse und unter anderem auch für die Entwicklung von Kernreaktoren.

Bekanntlich gehört Kohlenstoff zu den Stoffen, die unter Wärmeeinwirkung nicht schmelzen, sondern lediglich sintern. Es ist deshalb erforderlich, die Formgebung auf andere Art und Weise durchzuführen, indem das pulvrige Feststoffmaterial mit einem Bindemittel zu dem dann formbaren Gemisch aus Kohlenstoff und Bindemittel zusammengemischt wird, worauf nach Formgebung die dabei erhaltenen grünen Formlinge gebrannt werden. Die Formgebung des genannten Gemisches kann durch Strangpressen, Gesenkpressen, durch Rütteln und Stampfen erfolgen, wobei speziell für Elektroden das Strangpressen zur Anwendung gelangt. Das eingemischte Bindemittel wird beim Brennen in reduzierender und inerter Atmosphäre verkokt.

Die beim Brennen erhaltenen Formkörper, die sehr hart sind, werden dann im elektrischen Widerstandsofen unter Ausschluß von Sauerstoff bei 2700 °C graphitiert, wobei der Kohlenstoff in Graphit übergeht.

Die weitere mechanische Bearbeitung der erhaltenen Graphit-Formkörper kann mittels üblicher Metallbearbeitungsmaschinen, beispielsweise durch Abdrehen, erfolgen, wobei der entstehende Abfall und auch der Staub im allgemeinen unmittelbar abgesaugt werden.

Die nach den geschilderten üblichen Verfahren erhaltenen Graphit-Formkörper sind jedoch mit zahlreichen Poren durchsetzt, und zwar beträgt der Porenanteil etwa 1/4 des Volumens des Formkörpers. Diese Poren sind bei der späteren Verwendung der Graphit-Formkörper und insbesondere der Graphit-Elektroden in hohem Maße unerwünscht, da sie infolge der durch die Poren beschleunigten Oxidation durch den gesamten Formkörper hindurch hervorgerufenen schnellen Abbrand der Formkörper, insbesondere der Elektroden, herbeiführen und somit die Lebensdauer dieser Formkörper wesentlich herabsetzen.

Dieser bei Verwendung der Graphitelektroden im Elektroschmelzofen durch Reaktion des Kohlenstoffs mit dem Luftsauerstoff bei 500°C und höher beobachtete Seitenabbrand der Elektroden kann bis zu 70 % ihres Volumens betragen und beeinträchtigt nicht nur das Elektroschmelzen von Metallen und Metallegierungen als solches, sondern insbesondere die Wirtschaftlichkeit der Elektrodenverwendung, da praktisch nur ca. 30 % der Elektrodenmasse für den Schmelzprozeß zur Verfügung stehen.

Es wurde deshalb schon seit langem versucht, Verfahren zu entwickeln, mit denen es gelingt, dieses Porenvolumen herabzusetzen und damit nicht nur die Dichte, Festigkeit und Leitfähigkeit, sondern insbesondere die Oxidationsbeständigkeit der Graphit-Formkörper zu verbessern, den Seitenabbrand von Elektroden zu reduzieren und damit die Lebensdauer der Elektroden zu erhöhen.

Eines der bekannten Verfahren ist die Pechimprägnierung mit Petrol- oder Steinkohlenpech, und zwar im Vakuum oder unter Druck. Zum Abdichten der Poren werden häufig auch Kunstharze verwendet, die nach der Härtung im allgemeinen korrosionsfest sind, beispielsweise aber bei Graphit-Elektroden infolge deren Einsatzes bei Hochtemperaturen unbrauchbar sind; denn die Kunststoffe brennen dann sehr schnell ab und legen die Poren wieder frei.

Ein verhältnismäßig guter Oxidationsschutz sogar bis zu hohen Temperaturen kann mit Oberflächenschichten aus Carbiden, Siliciden, Boriden und Nitriden erreicht werden, die durch Aufstreichen mit anschließendem Brennen oder unter Verwendung von Spritzpistole und Plasmabrenner aufgebracht werden können. Die Herstellung dieser Oberflächenschichten ist aber nicht nur wegen der zu verwendenden Materialien kostenaufwendig sondern wegen der vergleichsweise komplizierten Herstellung der Oberflächenschichten auch zeitaufwendig. Daneben können Schutzschichten auch dadurch erzielt werden, daß die Graphit-Formkörper mit Phosphorsäure, Phosphaten oder Boraten getränkt oder angestrichen werden. Alle diese Schutzschichten sind aber nicht elektrisch leitfähig und erlauben daher keine Stromzuführung durch die Schutzschicht hindurch.

- 4 -

Es ist auch bereits bekannt, und zwar aus der DE-PS 12 71 007, oxidationsbeständige Kohlenstoffmaterialien dadurch herzustellen, daß zunächst ein klebstoffhaltiger Anstrich aus Aluminiumpulver und Siliciumcarbid aufgetragen und dieser dann anschließend mit einem elektrischen Lichtbogen bearbeitet wird. Weiterhin lehrt die unter den Nummer 44 884 veröffentliche europäische Anmeldung 80 107 559.9, zur Vermeidung des Verschmelzens der Kontaktbacken der Elektrodenfassungen mit der metallhaltigen Schutzschicht die Elektrodenoberfläche mit einem Gemisch aus Graphitpulver, aushärtbarem Kunstharz und wasserlöslichem Kleber zu beschichten. Schließlich beschreibt die vor kurzem unter der Nummer 134 770 veröffentlichte europäische Patentanmeldung 84 850 235.7 einen Kohlenstoffartikel, und zwar eine Kohlenstoff- oder Graphit-Elektrode mit einer oxidationsverhindernden Beschichtung, die dadurch hergestellt wird, daß zunächst eine poröse keramische Schicht aus gesintertem, feuerbeständigen, feinteiligen keramischen Material aufgetragen und über dieser Schutzschicht dann eine Deckschicht aus einer harten, glasurartigen Substanz, die bei Temperaturen über etwa 750 °C plastisch und fließfähig ist, aufgebracht wird.

Die bekannten Verfahren zum Abdichten der Poren von Graphit-Formkörpern haben sich insbesondere bei den Graphit-Elektroden, die für die Gewinnung von Elektrostahl zum Einsatz kommen, wegen der bei dieser Verwendung auftretenden hohen Temperaturen und der gleichzeitig einwirkenden oxidativen Bedingungen als noch nicht ausreichend erwiesen, um eine tatsächlich befriedigende Lebensdauer dieser Graphit-Elektroden zu gewährleisten.

- 5 -

Diese Graphit-Elektroden haben bei ihrem Einsatz im Elektrostahlschmelzofen Durchmesser von ca. 700 mm und Einzellängen von ca. 2700 mm, können allerdings auch über geeignete Nippel zu Elektrodensträngen größerer Längsabmessungen vereinigt werden. Sie sind im Gebrauch sehr starken thermischen und mechanischen Belastungen ausgesetzt; denn beispielsweise erreicht die Elektrodenspitze Temperaturen zwischen 3500 und 4000 °C. Die größte Verlustquelle für das Elektrodenmaterial stellt der bereits erwähnte Mantelabbrand mit ca. 50 % des Nettoverbrauches dar, der durch die bereits oben erwähnten Oberflächenschichten auf Aluminium/Silicium-Basis zwar vermindert werden kann, doch sind die dabei erzielbaren Ergebnisse noch immer äußerst unbefriedigend. Nicht zuletzt sind die stets wieder beobachteten Unzulänglichkeiten darauf zurückzuführen, daß der graphitisierte Kohlenstoff schwer benetzbar ist und eine sehr ungünstige Oberflächenspannung aufweist. Außerdem hat reiner Kohlenstoff einen sehr niedrigen Ausdehnungskoeffizienten, der bei 0 liegt, während die bisher üblichen Beschichtungen einen davon unterschiedlichen Wärmeausdehnungskoeffizienten besitzen. Formkörper und Beschichtung zeigen somit in der Wärme ein völlig anderes Ausdehnungsverhalten, was in der Praxis zur Folge hat, daß bei der thermischen Belastung Risse in der Beschichtung auftreten und infolge der Sauerstoffunterwanderung der Schichten großflächiges Abplatzen der Beschichtungen nahezu unvermeidlich ist. Diesem ungünstigen Verhalten vor allem bei glasartigen Beschichtungen, die durch die in der keramischen bzw. emaillierenden Industrie üblichen Brennprozesse auf die Graphit-Formkörper aufgebrannt wurden, suchte man zwar dadurch zu begegnen, daß spezielle Werkstoffe bei Beschichtungsverfahren eingesetzt wurden, bei denen die zu beschichtenden Formkörper nicht auf Temperaturen oberhalb 500°C aufgeheizt werden müssen, nämlich bei den eingangs bereits erwähnten, aber noch nicht voll befriedigenden Verfahren des Flamm- und Plasmaspritzens und auch des Plasmaspritzens im Vakuum.

Der vorliegenden Erfindung liegt demgegenüber die Aufgabe zugrunde, elektrisch leitfähig und oxidationsbeständig beschichtete Graphit-Formkörper, die die geschilderten Nachteile nicht aufweisen, bereitzustellen und ein Verfahren zu ihrer Herstellung verfügbar zu machen, das weniger kosten- und zeitaufwendig ist als die bisher bekannten Verfahren. Die Erfindung betrifft also ein Verfahren zur Herstellung von elektrisch leitfähig und oxidationsbeständig beschichteten Graphit-Formkörpern gemäß dem Oberbegriff des Anspruches 1, insbesondere von Graphit-Elektroden für Elektroschmelzöfen, die sich durch eine hohe Dichte, Festigkeit und Leitfähigkeit auszeichnen und keine Oberflächenporen nach der Beschichtung besitzen. Dieses Verfahren besteht in einer Kombination von Verfahrensschritten, die im Rahmen anderer, die Beschichtung von Graphit-Formkörpern betreffender Verfahren einzeln bereits bekannt sein mögen, in ihrer erfindungsgemäßen Kombination aber überraschende, für den Fachmann nicht vorhersehbare, und vor allem synergistische Wirkungen hervorrufende Effekte bei oxidationsbeständig beschichteten Graphit-Formkörpern mit sich bringen.

Diese Aufgabe wird erfindungsgemäß durch die kennzeichnenden Maßnahmen des Anspruches 1 gelöst.

Vorteilhafte Weiterbildungen der Erfindung sind Gegenstand der Unteransprüche.

Beim Verfahren gemäß der Erfindung ist es vor allem wichtig, daß die Oberflächenreinigung der Graphit-Formkörper, d.h. vor allem auch der Graphit-Elektroden, so sorgfältig vorgenommen wird, daß alle losen, insbesondere beim kalibrierenden Abdrehen der Elektrode gebildeten Drehstäube und Elektrodenpartikel sorgfältig entfernt werden, und zwar beispielsweise durch Sandstrahlen mit feinem Elektrokorundmehl oder feinstem Stahlsand, um die Oberfläche staubfrei zu machen und Feinrauhigkeit dieser Oberfläche zu erlangen. Sollte es sich in bestimmten Fällen als sinnvoll erweisen, eine zusätzliche Reinigung durchzuführen, so kann mit trockenen inerten Gasen abgeblasen werden, beispielsweise mit Stickstoff oder Kohlendioxid; auch eine Reinigung im Ultraschallbad kann von Vorteil sein. Sollte das kalibrierende Abdrehen der Elektrodenoberfläche entfallen können, hat es sich als zweckmäßig erwiesen, die Elektrodenoberfläche in der zur Beschichtung vorgesehenen Vakuumkammer unter der Einwirkung des übergreifenden Lichtbogens im Vakuum abzubrennen.

Das Verfahren gemäß der Erfindung kann ohne Schwierigkeiten in den dem Fachmann bekannten und im Handel erhältlichen Anlagen für das Vakuum-Plasmaverfahren durchgeführt werden. Diese Anlagen bestehen neben den für das Einführen der Formkörper erforderlichen Schleusenkammern im wesentlichen aus einer evakuierbaren Verfahrenskammer geeigneter Größe mit darin angeordneter Plasmaeinrichtung für die Vakuumbeschichtung sowie aus Mitteln zum Hin- und Herbewegen der Formkörper in Längsrichtung und Drehen dieser Formkörper auch um sich selbst, wobei die Plasmaeinrichtung mindestens einen Plasmabrenner aufweist. Die Plasmaeinrichtung kann beispielsweise Elektroden unterschiedlicher Polarität in Form eines Platten- oder Kammersystems aufweisen, um zwischen diesen Elektroden bzw. bei der Beschichtung mit den als Elektrode entsprechender Polarität geschalteten Graphit-Formkörpern ein Plasma aus einem geeigneten Gas oder Gasgemisch zu zünden. Hierfür eigenen sich neben den Edelgasen Argon und Helium bzw. deren Gemischen auch Stickstoff oder Wasserstoff sowie Gemische aus Argon/Wasserstoff und Stickstoff/Wasserstoff. Die Gase werden selbstverständlich im druckstabilisierten Zustand eingesetzt.

Selbstverständlich können bei großen, vor allem langgestreckten Graphit-Formkörpern, wie insbesondere den oben beschriebenen Graphit-Elektroden von mehr als 2 m Länge, auch mehrere Plasmabrenner eingesetzt werden, die die Beschichtung der Oberfläche der in der Kammer mit geeigneter Geschwindigkeit rotierenden Elektrode flächenübergreifend bewirken.

Durch die Erwärmung des Plasmagases im Lichtbogen und dessen anschließende Expansion ins Vakuum werden bekanntlich die Gasatome erheblich beschleunigt und können die dreifache Schallgeschwindigkeit erreichen. Die in die heiße Zone des Plasmastrahles mit seinen beschleunigten Gasatomen erfindungsgemäß injizierten Siliciumteilchen mit ausgewähltem Kornspektrum werden auf diese Weise wesentlich dichter auf dem Substrat abgeschieden, als dies im normalen Plasmaverfahren ohne Vakuum möglich ist, wodurch die Restporosität der aufzubringenden Schichten gegenüber dem Normaldruckverfahren um ein Vielfaches reduziert und eine Feinstoberflächenrauhigkeit der aufgebrachten Siliciumschichten erzielt wird.

Das für das Vakumm-Plasmabeschichtungsverfahren erforderliche Vakuum in der Größenordnung des Druckregelbereiches von 10 bis 200 mbar wird zweckmäßig durch eine seit langem bekannte und im Handel verfügbare Pumpenkombination erzeugt, die sich beispielsweise auch für die Hochvakuumbeschichtung von beispielsweise Glas- und Quarzkörpern und für die Kathodenzerstäubung bewährt hat und in der Kombination von Drehschieberpumpen und Roots-Pumpen besteht.

Außerdem können zur kontinuierlichen Beschichtung der Graphit-Formkörper dem Fachmann dafür geläufige Sondereinrichtungen verwendet werden, so daß auch die weitere kontinuierliche Nachführung von beispielsweise langgestreckten Formkörpern, wie Elektrodensträngen, durch Vorvakuum- und Vakuumabsaugkammern hindurch, die über Baffles und Schleusen mit der eigentlichen evakuierten Verfahrenskammer in Verbindung stehen, ermöglicht wird.

Erfindungswesentlich ist es beim Verfahren gemäß der Erfindung, daß die einzelnen Verfahrensschritte stets in ihrer Kombination zur Anwendung kommen, damit die Nachteile der bisher bekannten Verfahren tatsächlich ausgeschaltet und die nachstehend aufgeführten Vorteile der erfindungsgemäß erhaltenen Graphit-Formkörper, insbesondere der Graphit-Elektroden, insgesamt erreicht werden.

1. Die Silicium-Beschichtungen sind thermisch bis nahezu 1500°C belastbar.

2. Die Silicium-Beschichtungen sind fest, d.h. stoßfest mit dem Trägermaterial verbunden, so daß der Transport der beschichteten Elektroden vom Herstellungs- zum Einsatzort ohne Schwierigkeiten möglich ist.

3. Die Impermeabilität der Siliciumbeschichtungen ist bei thermischer Belastung bis ca. 1500°C gesichert, so daß keine Sauerstoffunterwanderung möglich ist und sich somit auch keine großflächigen Beschichtungsteile beim Erwärmen von der Elektrode ablösen.

4. Das Wärmeausdehnungsverhalten des Siliciums ist dem des Elektrographits außerordentlich ähnlich, so daß beim praktischen Einsatz der beschichteten Graphit-Formkörper höchstens geringfügige Scherkräfte auftreten können, die aber nicht zum Ablösen von Beschichtungsteilen führen können.

5. Die Siliciumbeschichtungen sind elektrisch leitend, so daß der bisher bei unbeschichteten Elektroden übliche elektrische Strom mit ca. 50 000 A über die Kupferklemmbacken auf die beschichteten Elektroden gegeben werden kann. Hierbei wird der Stromdurchgang von der Kupferklemmbacke durch die Siliciumbeschichtung hindurch in die Elektrode nicht wesentlich durch Strom-verluste beeinträchtigt. Das Beschichtungsmaterial ver-krustet nicht an der Kupferklemmbacke und verschmilzt insbesondere nicht mit dem Kupfer. Es können somit auch keine Kupferverluste auftreten; außerdem können keine Fehler in der Siliciumbeschichtung unterhalb der Klemm-

- 11 -

backe auftreten, sobald die Elektrode entsprechend dem Abbrand der Elektrodenspitze im Lichtbogen nachgeschoben wird.

Die Schichtdicke der Siliciumbeschichtung auf den Graphit-Formkörpern kann ohne Schwierigkeiten bei optimaler Einstellung von Spritzabstand, Kornspektrum des Siliciums und Vorschub der Elektrode in einem einzigen Beschichtungsgang in der Größenordnung von 0,2 mm erreicht werden.

7. Das Porenvolumen in der erfindungsgemäß aufgebrachten Siliciumbeschichtung wird gegenüber dem bei Normaldruck erzielten Porenvolumen von ca. 30 % erheblich reduziert und beträgt nur noch 10 Vol.-% oder weniger.

8. Der Materialwert der Siliciumbeschichtung und die Wirtschaftlichkeit des Beschichtungsverfahrens gemäß der Erfindung liegt unterhalb von 10 bis 20 % des Wertes der zu beschichtenden Graphit-Elektrode, so daß bei einem Materialwert einer noch nicht beschichteten, für das Elektroschmelzen geeigneten Normalelektrode von etwa DM 6000.-- die Wirtschaftlichkeit der gesamten Technologie gegeben ist.

Im Ganzen gesehen ist es somit durch das Verfahren gemäß der Erfindung, bei dem nicht nur die Reinigung und vorbereitende Vorbehandlung des zu beschichtenden Substrats, sondern auch durch die spezielle Auswahl der Kornfraktionen des Siliciums, seinem Trocknen und Entgasen im Vakuum, der fachmännischen Einhaltung der Bewegungsgeschwindigkeit und des Abstandes des Plasmabrenners und der Konstanz des übergreifenden Lichtbogens erstmals in tatsächlich befriedigender und wirtschaftlicher Weise möglich, elektrisch leitfähige, dichte Siliciumschichten auf Graphit-Formkörpern und insbesondere auf Graphit-Elektroden für Elektroschmelzöfen, die hohe Beständigkeit gegenüber Oxidation und Temperaturbeanspruchung aufweisen, zu erzielen. Auf diese Weise gelingt es, Graphit-Formkörper herzustellen, die ohne das zwar gegebenenfalls mögliche zusätzliche und eventuell noch geringfügiges Porenvolumen zur völligen Sicherheit beseitigende Imprägnieren der siliciumbeschichteten Oberfläche mit Borsäurelösung eine für die praktische Anwendung ausreichende Impermeabilität aufweisen.

Die Erprobungen der erfindungsgemäß hergestellten siliciumbeschichteten Graphit-Elektroden in Elektroschmelzwerken unter den dort üblichen Originalbedingungen haben gezeigt, daß erhebliche Mengen an Elektrographit und damit beachtliche Kosten eingespart werden können, wobei es von nicht zu unterschätzender Bedeutung ist, daß selbst bei praktischen Langzeiterprobungen weder an den Elektrodenklemmbacken aus Kupfer Verkrustungen festzustellen sind, noch an der Siliciumbeschichtung Fehlstellen oder andere den Gebrauch beeinflussende Veränderungen auftreten.

0237780

- 13 -

P a t e n t a n s p r ü c h e

1. Verfahren zur Herstellung von elektrisch leitfähig und
oxidationsbeständig beschichteten Graphit-Formkörpern,
wie Graphit-Elektroden für das Elektroschmelzen von
Metallen und Metallegierungen, gekennzeichnet durch die
Kombination der folgenden Verfahrensmerkmale:

   (a) Abdrehen der Graphit-Elektrode, gegebenenfalls
      auch unter Kalibrieren;

   (b) Sandstrahlen der abgedrehten Elektrode;

   (c) gegebenenfalls Abblasen von Reststaub ünd/oder
      Elektrodenpartikeln von der sandgestrahlten Elektrode mittels Inertgas;

   (d) Entgasen und Trocknen von ein Korngrößenspektrum
      von 0 bis 120 µm aufweisendem technischen Silicium-Pulver im Vakuum;

   (e) Einbringen der gemäß (a), (b) und gegebenenfalls
      (c) vorbehandelten Elektroden in eine mit Plasma-
      Einrichtung ausgestattete evakuierbare Verfahrenskammer und Evakuieren der Kammer auf einen End-
      druck von $10^{-2}$ bis $10^{-3}$ mbar;

   (f) Aufbringen des gemäß (d) in der Kammer oder außerhalb der Kammer vorbehandelten Siliciumpulvers auf
      die Elektrodenoberfläche in einer Schichtdicke von
      mindestens 0,1 mm mittels des scharf gebündelten
      konzentrierten Plasmastrahls mindestens eines Plasmabrenners der Vakuum-Plasma-Einrichtung im Druckregelbereich von 0,5 bis 200 mbar in der Kammer;

   (g) Aufheben des Vakuums durch Fluten der Kammer unter
      gleichzeitigem Abkühlen auch der Elektrode;

(h) Ausbringen der siliciumbeschichteten Elektrode aus der Kammer und weiteres Kühlen der Elektrode unter Ausschluß reaktionsfähiger Gase.

2. Verfahren nach Anspruch 1, dadurch gekennzeichnet, daß das Sandstrahlen der Graphit-Elektrode mit feinteiligem Elektrokorundmehl und/oder Stahlsand durchgeführt wird.

3. Verfahren nach Anspruch 1 oder 2, dadurch gekennzeichnet, daß als Inertgase Stickstoff oder Kohlendioxid verwendet werden.

4. Verfahren nach Anspruch 1 oder 2, dadurch gekennzeichnet, daß Reststaub und Elektrodenpartikel durch Sputtern im übertragenen Lichtbogen entfernt werden.

5. Verfahren nach Anspruch 1, dadurch gekennzeichnet, daß ein Siliciumpulver mit einem Korngrößenspektrum von 5 bis 90 µm, vorzugsweise von 15 bis 75 µm, besonders bevorzugt von 45 bis 60 µm verwendet wird.

6. Verfahren nach Anspruch 1 bis 5, dadurch gekennzeichnet, daß in der Vakuumkammer ein Druck von 0,01 mbar eingestellt wird.

7. Verfahren nach Anspruch 1 bis 6, dadurch gekennzeichnet, daß mindestens zwei oszillierende Plasmabrenner im Druckregelbereich von 10 bis 100 mbar verwendet werden.

8. Verfahren nach Anspruch 1 bis 7, dadurch gekennzeichnet, daß das vorbehandelte Siliciumpulver auf die Oberfläche der im Vakuum auf Temperaturen im Bereich von 600 °C bis 900 °C aufgeheizten Elektrode aufgebracht wird.

0237780

9. Verfahren nach Anspruch 1 bis 8, dadurch gekennzeichnet, daß das Fluten der Vakuumkammer unter Inertgas erfolgt.

10. Verfahren nach Anspruch 1 bis 9, dadurch gekennzeichnet, daß das Ausbringen und weitere Kühlen der siliciumbeschichteten Graphit-Elektrode unter Inertgas erfolgt.

11. Verfahren nach Anspruch 1 bis 10, dadurch gekennzeichnet, daß es kontinuierlich durchgeführt wird.